# EUROPEAN PATENT SPECIFICATION

(11) **EP 3 919 851 B1**
(45) Date of publication and mention of the grant of the patent: **25.02.2026**
(21) Application number: 19913800.9
(22) Date of filing: 13.12.2019
(51) Int. Cl.: F41H 5/04, B61C 17/04, B32B 33/00

(54) **BALLISTIC-RESISTANT PARTITION WALL**
BALLISTISCH WIDERSTANDSFÄHIGE TRENNWAND
CLOISON DE SÉPARATION PARE-BALLES

(30) Priority: 29.01.2019 CN 201910086082
(43) Date of publication of application: 08.12.2021
(73) Proprietor: CRRC Changchun Railway Vehicles Co., Ltd., Changchun, Jilin 130000 (CN)
(72) Inventor: DONG, Xueyan, Jilin 130000 (CN); DENG, Hai, Jilin 130000 (CN); XIA, Dongwei, Jilin 130000 (CN); JIN, Xiaoming, Jilin 130000 (CN); ZHOU, Shining, Jilin 130000 (CN)
(74) Representative: Reddie & Grose LLP
(86) International application number: PCT/CN2019/125135
(87) International publication number: WO 2020/155880

(56) References cited:
- EP-A2- 0 624 459
- CN-A- 101 454 634
- CN-A- 109 016 721
- CN-A- 110 539 759
- CN-U- 205 388 440
- CN-U- 206 520 280
- CN-U- 206 709 696
- CN-U- 209 454 735
- DE-A1- 102005 016 654
- US-A1- 2006 046 034
- US-A1- 2010 012 004
- US-A1- 2011 041 679
- US-A1- 2016 230 444
- US-A1- 2017 254 625

## Description

This application claims the priority to Chinese Patent Application No. 201910086082.9 titled "BALLISTIC-RESISTANT PARTITION WALL OF MOTOR TRAIN UNIT", filed with the China National Intellectual Property Administration on January 29, 2019.

### FIELD

The present application relates to the technical field of motor train units, and in particular to a ballistic-resistant partition wall of a motor train unit.

### BACKGROUND

Most of rear walls of cabs of existing motor train units have no ballistic-resistant function. Even if it has the ballistic resistant function, it is only ballistic resistant for pistol bullets. The ballistic-resistant function is weak, and the special safety requirement with respect to a cab of a motor train unit is not fully considered. Moreover, plywood is generally used as the material of the rear wall of the cab of the motor train unit, and the exposed surface is of wood style, so the aesthetic degree needs to be improved.

Herein, it should be noted that, the technical contents provided in this section are intended to assist understanding of the present application by the person skilled in the art, and do not necessarily constitute the conventional technology.
US2010012004A1 discloses basalt particles, when combined with a resin binder and a reinforcing material, such as fiberglass, provide unexpected strength, fire-resistance, radiation impermeability, and projectile shielding for ballistic armor/shields, fire-resistant building panels, construction blocks and protective coatings on substrates. The armor panels can be worn, as in a bullet-proof vest, or can be used as a shield to protect a vehicle, aircraft or other structures as projectile penetration-resistant and fire and radiation resistant materials.

### SUMMARY

In view of this, an object of the present application is to provide a ballistic-resistant partition wall of a motor train unit, so as to improve the ballistic-resistant ability of a cab of the motor train unit.

In order to achieve the above object, following solutions are provided by the present application.

The invention is the ballistic resistant partition wall according to the appended claim 1.

Preferably, in the ballistic-resistant partition wall of the motor train unit, the thickness of the ballistic-resistant armor plate main body is 2.5mm.

Preferably, in the ballistic-resistant partition wall of the motor train unit, the thickness of the paper honeycomb plate is 28 to 32mm.

Preferably, in the ballistic-resistant partition wall of the motor train unit, the thickness of the aluminum honeycomb composite plate is 6 to 10mm.

Preferably, in the ballistic-resistant partition wall of the motor train unit, the thickness of a toughened glass is 3 to 5mm.

Preferably, in the ballistic-resistant partition wall of the motor train unit, a ballistic-resistant armor plate main body is surrounded on a ballistic-resistant armor plate edge in a peripheral direction of the ballistic-resistant armor plate main body, and the paper
honeycomb plate is surrounded in the ballistic-resistant armor plate edge.

The ballistic-resistant partition wall of the motor train unit provided by the present application includes the ballistic-resistant armor plate main body. The inner sound insulation pad and the inner fire-resistant plate are arranged on the inner side of the ballistic-resistant armor plate main body from the inside to the outside, and the outer sound insulation pad is adhered to the outer side of the ballistic-resistant armor plate main body. The thickness of the ballistic-resistant armor plate main body is 2.3 to 2.7mm. The ballistic-resistant armor plate main body is built in the ballistic-resistant partition wall, and the thickness of the ballistic-resistant armor plate main body is 2.3 to 2.7mm, thereby ensuring the overall ballistic-resistant ability of the ballistic-resistant partition wall and reducing the weight of the wall. The sound insulation pad is arranged on each of the two sides of the ballistic-resistant armor plate main body, and the fire-resistant plate is arranged on the inner side of the ballistic-resistant armor plate main body, that is, a side close to the cab, so as to ensure the sound insulation ability of the working space.

### BRIEF DESCRIPTION OF THE DRAWINGS

The above and other objects, features and advantages of the present application are apparent from the following description given in conjunction with the drawings. In the drawing:

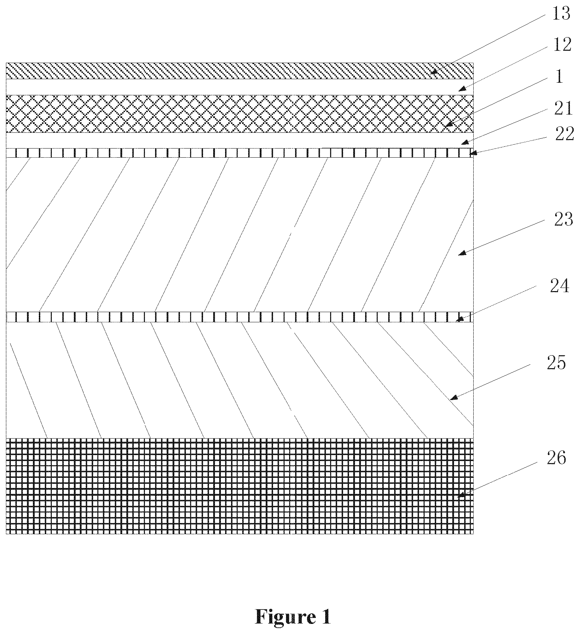

Figure 1 is a schematic sectional view of a ballistic-resistant partition wall of a motor train unit provided according to the present application.

### DETAILED DESCRIPTION OF THE EMBODIMENTS

The technical solutions of the present application are described with embodiments in the following, but are not limited thereto.

Referring to Figure 1, Figure 1 a schematic sectional view of a ballistic-resistant partition wall of a motor train unit provided according to the present application.

The ballistic-resistant partition wall of the motor train unit is provided by the present application, which includes a ballistic-resistant armor plate main body 1. An inner sound insulation pad 12 and an inner fire-resistant plate 13 are arranged on an inner side of the ballistic-resistant armor plate main body from an inside to an outside, and the outer sound insulation pad 21 is adhered to an outer side of the ballistic-resistant armor plate main body 1. The thickness of the ballistic-resistant armor plate main body 1 is 2.3 to 2.7mm. The ballistic-resistant armor plate main body 1 is built in the ballistic-resistant partition wall, and the thickness of the ballistic-resistant armor plate main body is 2.3 to 2.7mm, thereby ensuring the overall ballistic-resistant ability of the ballistic-resistant partition wall and reducing the weight of the wall. A sound insulation pad is arranged on each of two sides of the ballistic-resistant armor plate main body 1, and the fire-resistant plate 13 is arranged on the inner side of the ballistic-resistant armor plate main body 1, that is, a side close to the cab, so as to ensure the sound insulation ability of the working space.

In a specific embodiment of the present application, a honeycomb plate is further adhered to the outer side of the outer sound insulation pad 21, and a toughened glass decorative layer 26 is adhered to an outer side of the honeycomb plate. The outer side of the ballistic-resistant armor plate main body 1 is a passenger compartment. A TV and other equipments are generally installed on the ballistic-resistant partition wall. In order to improve the bearing capacity of the ballistic-resistant partition wall, the honeycomb plate is adhered to the outer sound insulation pad to improve the bearing capacity of the ballistic-resistant partition wall, and the toughened glass decorative layer is adhered to the outer side of the honeycomb plate to improve the beauty of the ballistic-resistant partition wall.

In a specific embodiment of the present application, the honeycomb plate includes a paper honeycomb plate 23 adhered to the outer sound insulation pad 21 and an aluminum honeycomb composite plate 25 arranged on an outer side of the paper honeycomb plate 23. The honeycomb plate includes the inner paper honeycomb plate 23 and the outer aluminum honeycomb composite plate 25. The weight of ballistic-resistant partition wall is reduced by the paper honeycomb plate 23, and the bearing capacity of the ballistic-resistant partition wall is ensured by the aluminum honeycomb composite plate 25.

In a specific embodiment of the present application, a first prepreg bonding layer 22 is provided between the paper honeycomb plate 23 and the outer sound insulation pad 21, and a second prepreg bonding layer 24 is provided between the paper honeycomb plate 23 and the aluminum honeycomb composite plate 25. Prepreg is a composite of resin matrix and reinforcement by impregnating continuous fiber or fabric with resin matrix under strictly controlled conditions, and is an intermediate material for manufacturing composite materials. The outer sound insulation pad, the paper honeycomb plate and the aluminum honeycomb composite plate are sequentially connected by the first prepreg bonding layer and the second prepreg bonding layer to form an integrated structure, which further ensures the overall strength of the ballistic-resistant partition wall.

In an embodiment, the thickness of the ballistic-resistant armor plate main body 1 is 2.3 to 2.7mm. More preferably, the thickness of the ballistic-resistant armor plate main body 1 is 2.5mm. The thickness of the inner sound insulation pad and the outer sound insulation pad is 0.9 to 1.2mm, preferably 1 mm. The thickness of the paper honeycomb plate 23 is 28 to 32mm, preferably 30mm.

The thickness of the aluminum honeycomb composite plate 25 is 6 to 10mm, preferably 8mm. The thickness of the toughened glass is 3 to 5mm, preferably 4mm.

In a specific embodiment of the present application, the ballistic-resistant armor plate main body 1 is surrounded by a ballistic-resistant armor plate edge in a peripheral direction of the ballistic-resistant armor plate main body 1, and the paper honeycomb plate 23 is surroundingly arranged in the ballistic-resistant armor plate edge.

The ballistic-resistant armor plate main body 1 of the ballistic-resistant partition wall is arranged close to the inner side. The ballistic-resistant armor plate main body 1 is eccentrically compounded with each layer, that is, the armor plate is not in the middle of the sandwich structure, thus leaving enough space for embedding a TV.

In order to ensure the overall stability of the ballistic-resistant partition wall after the ballistic-resistant armor plate main body is eccentrically compounded. The periphery of the ballistic-resistant armor plate is surrounded by the ballistic-resistant armor plate edge, and the paper honeycomb core material is filled in an "armor basin" that its periphery is surrounded. At the same time, the problem of connection and fixation between a wall and a vehicle body is solved.

According to the ballistic-resistant partition wall provided by the present embodiment, the ballistic-resistant performance meets the grade B protection requirements of the technical conditions for protection of special cash carriers (GA164-2005), which can effectively protect the shooting of 79 submachine guns with steel core bullets, and improve the safety level of the cab of the motor train unit.

The above only describes some preferred embodiments of the present application, which should not be taken as limitation to the present application. Any skilled in the art, may make many possible changes and modifications to the technical solutions of the present application. Any modifications, equivalent substitutions or modifications made within the principle of the present application fall within the protection scope of the present application.

## Claims

1. A ballistic-resistant partition wall of a motor train unit, comprising a ballistic-resistant armor plate main body (1),
further comprising an inner sound insulation pad (12) and an inner fire-resistant plate (13) arranged on an inner side of the ballistic-resistant armor plate main body (1) from an inside to an outside, and an outer sound insulation pad (21) adhered to an outer side of the ballistic-resistant armor plate main body (1), and a thickness of the ballistic-resistant armor plate main body (1) is 2.3 to 2.7mm; **characterized in that** the ballistic-resistant partition wall
further comprises a honeycomb plate further adhered to an outer side of the outer sound insulation pad (21), and a toughened glass decorative layer (26) adhered to an outer side of the honeycomb plate;
wherein the honeycomb plate comprises a paper honeycomb plate (23) adhered to the outer sound insulation pad (21) and an aluminum honeycomb composite plate (25) arranged on an outer side of the paper honeycomb plate (23);
and further comprises a first prepreg bonding layer (22) provided between the paper honeycomb plate (23) and the outer sound insulation pad (21), and a second prepreg bonding layer (24) provided between the paper honeycomb plate (23) and the aluminum honeycomb composite plate (25); and
wherein a thickness of the inner sound insulation pad (12) and a thickness of the outer sound insulation pad (21) is 0.9 to 1.2mm.

2. The ballistic-resistant partition wall of the motor train unit according to claim 1, wherein a thickness of the paper honeycomb plate (23) is 28 to 32mm.

3. The ballistic-resistant partition wall of the motor train unit according to claim 2, wherein a thickness of the aluminum honeycomb composite plate (25) is 6 to 10mm.

4. The ballistic-resistant partition wall of the motor train unit according to claim 3, wherein a thickness of a toughened glass is 3 to 5mm.

5. The ballistic-resistant partition wall of the motor train unit according to claim 1, wherein, the ballistic-resistant armor plate main body is surrounded by a ballistic-resistant armor plate edge in a peripheral direction of the ballistic-resistant armor plate main body, and the paper honeycomb plate is surrounded in the ballistic-resistant armor plate edge.

## Patentansprüche

1. Ballistisch widerstandsfähige Trennwand eines Triebwagens, die einen ballistisch widerstandsfähigen Panzerplattenhauptkörper (1) beinhaltet,
die ferner Folgendes beinhaltet:
eine innere Schalldämmmatte (12) und eine innere feuerbeständige Platte (13), die von innen nach außen an einer Innenseite des ballistisch widerstandsfähigen Panzerplattenhauptkörpers (1) angeordnet sind, und eine äußere Schalldämmmatte (21), die an einer Außenseite des ballistisch widerstandsfähigen Panzerplattenhauptkörpers (1) angebracht ist, und wobei eine Dicke des ballistisch widerstandsfähigen Panzerplattenhauptkörpers (1) 2,3 bis 2,7 mm beträgt; **dadurch gekennzeichnet, dass** die ballistisch widerstandsfähige Trennwand ferner Folgendes beinhaltet:
eine Wabenplatte, die ferner an einer Außenseite der äußeren Schalldämmmatte (21) angebracht ist, und eine dekorative Schicht aus Einscheiben-Sicherheitsglas (26), die an einer Außenseite der Wabenplatte angebracht ist;
wobei die Wabenplatte eine Papierwabenplatte (23), die an der äußeren Schalldämmmatte (21) angebracht ist, und eine Aluminiumwabenverbundplatte (25), die an einer Außenseite der Papierwabenplatte (23) angeordnet ist, beinhaltet;
und ferner Folgendes beinhaltet:
eine erste Prepreg-Verbindungsschicht (22), die zwischen der Papierwabenplatte (23) und der äußeren Schalldämmmatte (21) vorgesehen ist, und eine zweite Prepreg-Verbindungsschicht (24), die zwischen der Papierwabenplatte (23) und der Aluminiumwabenverbundplatte (25) vorgesehen ist; und
wobei eine Dicke der inneren Schalldämmmatte (12) und eine Dicke der äußeren Schalldämmmatte (21) 0,6 bis 1,2 mm beträgt.

2. Ballistisch widerstandsfähige Trennwand des Triebwagens nach Anspruch 1, wobei eine Dicke der Papierwabenplatte (23) 28 bis 32 mm beträgt.

3. Ballistisch widerstandsfähige Trennwand des Triebwagens nach Anspruch 2, wobei eine Dicke der Aluminiumwabenverbundplatte (25) 6 bis 10 mm beträgt.

4. Ballistisch widerstandsfähige Trennwand des Triebwagens nach Anspruch 3, wobei eine Dicke eines Einscheiben-Sicherheitsglases 3 bis 5 mm beträgt.

5. Ballistisch widerstandsfähige Trennwand des Triebwagens nach Anspruch 1, wobei der ballistisch widerstandsfähige Panzerplattenhauptkörper von einem ballistisch widerstandsfähigen Panzerplattenrand in einer Umfangsrichtung des ballistisch widerstandsfähigen Panzerplattenhauptkörpers umgeben ist und die Papierwabenplatte in dem ballistisch widerstandsfähigen Panzerplattenrand umgeben ist.

## Revendications

1. Cloison pare-balles d'une unité de rame motrice, comprenant un corps principal à plaque de blindage pare-balles (1),
comprenant en outre
un matelas d'isolation acoustique interne (12) et une plaque coupe-feu interne (13) arrangée sur un côté intérieur du corps principal à plaque de blindage pare-balles (1) de l'intérieur à l'extérieur, et un matelas d'isolation acoustique externe (21) fixé sur un côté extérieur du corps principal à plaque de blindage pare-balles (1), et une épaisseur du corps principal à plaque de blindage pare-balles (1) est de 2,3 à 2,7 mm ; **caractérisée en ce que** la cloison pare-balles
comprend en outre
une plaque nid d'abeille fixée en plus sur un côté extérieur du matelas d'isolation acoustique externe (21), et une couche décorative en verre trempé (26) fixée sur un côté extérieur de la plaque nid d'abeille ;
dans laquelle la plaque nid d'abeille comprend une plaque nid d'abeille en papier (23) fixée au matelas d'isolation acoustique externe (21) et une plaque composite nid d'abeille en aluminium (25) arrangée sur un côté extérieur de la plaque nid d'abeille en papier (23) ;
et comprend en outre
une première couche de liaison préimprégnée (22) fournie entre la plaque nid d'abeille en papier (23) et le matelas d'isolation acoustique externe (21), et une deuxième couche de liaison préimprégnée (24) fournie entre la plaque nid d'abeille en papier (23) et la plaque composite nid d'abeille en aluminium (25) ; et
dans laquelle une épaisseur du matelas d'isolation acoustique interne (12) et une épaisseur du matelas d'isolation acoustique externe (21) est de 0,9 à 1,2 mm.

2. Cloison pare-balles de l'unité de rame motrice selon la revendication 1, dans laquelle une épaisseur de la plaque nid d'abeille en papier (23) est de 28 à 32 mm.

3. Cloison pare-balles de l'unité de rame motrice selon la revendication 2, dans laquelle une épaisseur de la plaque composite nid d'abeille en aluminium (25) est de 6 à 10 mm.

4. Cloison pare-balles de l'unité de rame motrice selon la revendication 3, dans laquelle une épaisseur d'un verre trempé est de 3 à 5 mm.

5. Cloison pare-balles de l'unité de rame motrice selon la revendication 1, dans laquelle le corps principal à plaque de blindage pare-balles est entouré d'un bord de plaque de blindage pare-balles dans une direction périphérique du corps principal à plaque de blindage pare-balles, et la plaque nid d'abeille en papier est encerclée par le bord de plaque de blindage pare-balles.
